Europäisches Patentamt

(19) European Patent Office

Office européen des brevets

(11) Publication number: **0 108 577**
**A1**

## (12) EUROPEAN PATENT APPLICATION

(21) Application number: **83306594.9**

(22) Date of filing: **28.10.83**

(51) Int. Cl.³: **F 16 H 39/08**

(30) Priority: **03.11.82 US 438800**

(43) Date of publication of application:
**16.05.84 Bulletin 84/20**

(84) Designated Contracting States:
**BE DE FR GB IT SE**

(71) Applicant: **Wilinsky, Jack**
**145 Oakdene Avenue**
**Teaneck New Jersey(US)**

(72) Inventor: **Wilinsky, Jack**
**145 Oakdene Avenue**
**Teaneck New Jersey(US)**

(74) Representative: **Wright, Hugh Ronald**
**Brookes & Martin High Holborn House 52/54 High**
**Holborn**
**London WC1V 6SE(GB)**

(54) Power transmission apparatus.

(57) Power transmission apparatus for driving an output shaft (3) from an input shaft (2) comprising a fluid cylinder (36) secured to the output shaft (3) and a piston (35) slidably mounted in the cylinder. The piston (35) is driven in reciprocal movement in the cylinder (36) in response to rotation of the input shaft (2). The movement of the piston (35) is controllably damped in the cylinder (36) to produce controlled rotation of the output shaft (3) in correspondence therewith whereby the output shaft (3) can be driven from the input shaft (2) with a variable speed of rotation. By utilising a first swash (1) mechanism to drive the piston (35) from the input shaft (2) and a second swash mechanism (4a) to control damping, a variable speed differential hydrostatic transmission is obtained.

FIG. I

EP 0 108 577 A1

1

## POWER TRANSMISSION APPARATUS

The invention relates to a power transmission apparatus for driving an output shaft from an input shaft.

The invention, in one arrangement, relates to power transmission apparatus which will permit selective drive of the output shaft at a variable gear ratio with respect to the input shaft.

The invention also relates to methods of operation of such power transmission apparatus.

The method and apparatus may, in a preferred embodiment, allow the variation of drive of the output shaft from the input shaft in a ratio which is both positive and negative.

A wide variety of clutch and transmission mechanisms are known in which hydraulic power is employed for the drive and/or control.

The following show examples of the wide variety of clutches and power transmissions:

US Patent 1 855 899
US Patent 2 089 786
US Patent 3 197 005
US Patent 3 362 514
US Patent 4 093 051
US Patent 4 227 602

In the conventional systems, clutch engagement is effected by means of high friction surfaces which lead to high wear forces requiring frequent replacement of the friction elements. Additionally, heat is generated during engagement and disengagement of the clutch which must be dissipated. In the case of hydraulic transmissions, it is necessary to circulate a volume of hydraulic fluid at high speeds which leads to generation of heat and substantial energy losses. Moreover, the hydraulic fluid has high inertia whgich opposes rapid variations in speed change. In mechanical clutches, it is necessary to apply high force to the engaging members to hold them in engaged relation when the clutch is operative.

Also known in the art are so-called wobble plate or swash-type drive mechanisms for hydraulica and pneumatic pumps and motors.

Typical swash-type drive mechanisms can be found in the following patents:

US Patent 2 104 391
US Patent 2 231 100
US Patent 2 478 481
US Patent 3 010 339
US Patent 3 973 471
US Patent 4 221 545
US Patent 4 235 116

The present invention provides, according to a first aspect, apparatus for transmitting power from an input shaft having an axis of rotation to an output shaft, said apparatus comprising variable displacement pumping means secured to said output shaft and including a movable member for pumping a fluid, means connected to said input shaft for producing movement of said movable member in response to rotation of said input shaft, and means for controllably damping movement of said member to produce controlled rotation of said output shaft in correspondence therewith whereby the output shaft can be driven from the input shaft with a variable degree of rotation.

The present invention provides, according to a further aspect, power transmitting apparatus comprising an input shaft having an axis of rotation, an input plate mounted on said input shaft for adjustable angular position relative to said axis of rotation, an output shaft, an output plate mounted for universal movement on said output shaft, means connecting said input and output plates together in coupled relation and permitting angular rotation relative to one another, means for adjusting the angular position of said input plate relative to said input shaft and thereby the angular position of the output plate therewith relative to said output shaft, and means secured to said output shaft and connected to said output plate for controllably holding the output plate in said angular position whereby the output plate becomes coupled in rotation with the input plate and said output shaft is driven in

4

rotation.

The present invention provides, according to a further aspect, a method of controllably transmitting torque between an input shaft and an output shaft, said method comprising producing movement of a member in a container containing an incompressible fluid in response to rotation of the input shaft, controllably damping external circulation of the fluid in said container to damp movement of said member in said container and rotating the output shaft in response to the degree of damping of the movement of said member in said container.

The present invention provides, according to a further aspect, apparatus for transmitting power from an input shaft having an axis of rotation to an output shaft, said apparatus comprising variable displacement hydrostatic pumping means secured to said output shaft for producing fluid flow upon differential rotation of said input and output shafts, and power control means for controlling said fluid flow by selectively absorbing or dissipating the power of the fluid flow whereby the output shaft can be driven by the input shaft with a variable degree of rotation.

The invention will be described hereafter in relation to preferred embodiments thereof given by way of example and with reference to the attached drawings in which:

Figure 1 is a diagrammatic illustration, partly in cross-section of a first embodiment of a clutch mechanism according to the invention,

Figure 2 is a sectional view taken on line 2-2 in Figure 1,

Figure 3 is a diagrammatic illustration of a modification of a portion of the construction shown in Figure 1,

Figure 4 is a diagrammatic illustration, partly in section of a modification of a portion of the clutch mechansim of Figure 1,

Figure 5 is a sectional view taken on line 5-5 in Figure 4,

Figure 6 is a view similar to Figure 5 of a modified embodiment,

Figure 7 is a diagrammatic illustration of a modification of the construction shown in Figure 1 to convert the same to a directional oil pump,

Figure 7A diagrammatically illustrates another modification of the construction in Figure 1,

Figure 8 is a view taken on line 8-8 in Figure 7,

Figure 9 is a diagrammatic illustration, partly in section of a clutch mechanism serving as a variable transmission,

Figure 9A illustrates a modification of the construction in Figure 9,

Figure 9B illustrates another modification of the construction in Figure 9,

Figure 10 is a schematic illustration of the transmission in Figure 9,

Figure 11 is a simplified schematic illustration of the transmission in Figure 10,

Figure 12 is a schematic illustration of a conventional hydrostatic transmission,

Figure 13 diagrammatically illustrates a modification of the construction in Figure 7, and,

Figure 14 diagrammatically illustrates another modification of the construction in Figure 7.

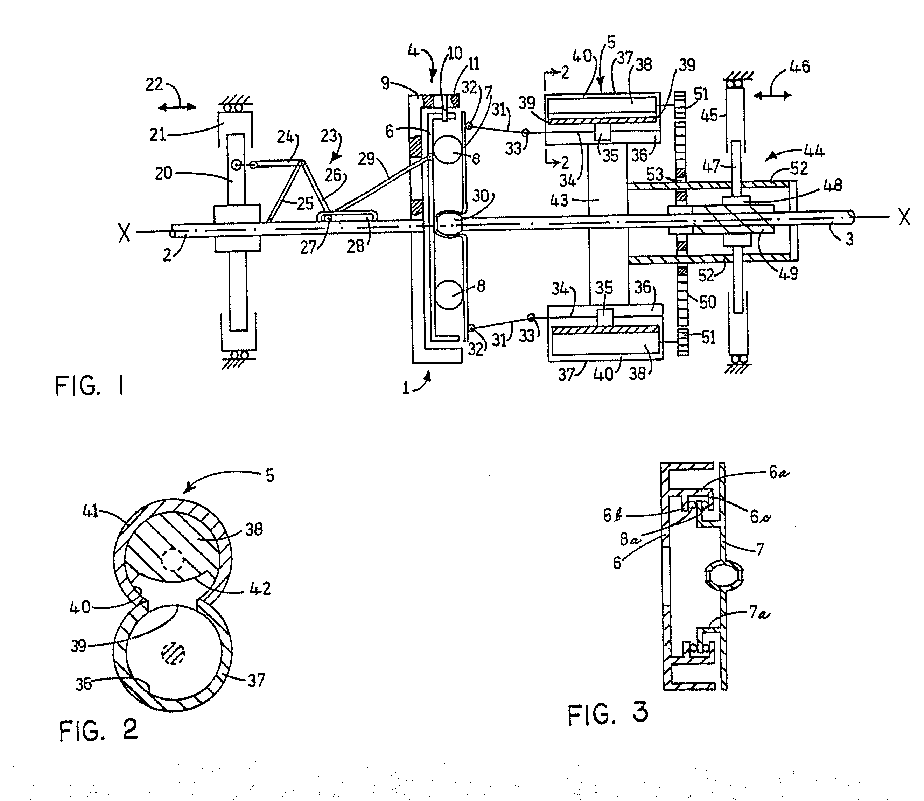

Referring to Figure 1 of the drawings, therein is shown power transmitting apparatus in the form of a clutch mechanism 1 having a variable degree of engagement between an input shaft 2 and an output shaft 3. The variable degree of engagement is provided by a swash mechanism 4 and a variable damping mechanism 5 as will be explained in detail, subsequently. The input shaft 2 is driven in rotation from a source (not shown) around axis X-X.

The input shaft 2 and the output shaft 3 are axially aligned.

The swash plate mechanism 4 comprises an input plate 6 and a facing output plate 7 between which is a bearing mechansim illustrated as a ball-bearing 8 which permits relative angular rotation of input plates 6 and 7 with respect to the axis of rotation X-X of the input shaft 2. The input plate 6 is supported on a frame 9 which is fixed to the input shaft 2. The support of the input plate 6 is by pivot pins 10 which are fitted in slots 11 in the frame 9 to permit the input plate 6 to undergo pivotal movement about axis X-X.

In order to adjust the angular position of input plate 6 with respect to the input shaft 2, an actuator or control disk 20 is spline connected to the shaft 2 such that it is coupled in rotation therewith but is capable of relative axial movement therealong. A slide 21 which is supported on fixed structure for axial travel parallel to axis X-X straddles the disk 20 to displace the same axially in opposite directions along input shaft 2. The slide 21 is externally actuated for movement in the direction shown by the double arrows designated by numeral 22. The disk 20 is connected to the input plate 6 by a linkage mechanism 23 such that travel of disk 20 produces pivotal movment of input plate 6.

The link mechanism 23 comprises a control rod 24

8

which is pivotably connected to disk 20. A pair of locking rods 25 and 26 are connected to the free end of rod 24. The rod 25 is pivotably connected to the input shaft 2 and the rod 26 carried a pin 27 at its lower end which is slidable in a guide slot 28 on the input shaft 2. A swash rod 29 is pivotally mounted at one end on pin 27 and at the other end, the rod 29 is pivotably connected to input plate 6 at a location offset from the centre of the plate. In the position illustrated in Figure 1, the input plate extends in a plane perpendicular to the axis of rotation X-X of input shaft 2. In order to place the swash mechanism 4 into an angulated position, the slide 21 is displaced to the right in Figure 1 to cause the disk 20 to slide axially on the shaft 2. This produces pivotal movement of the rod 24 and displacement of pin 27 in slot 28 to the right end thereof. This causes swash rod 29 to pivot the input plate 6 to an inclined position with respect to the axis X-X of input shaft 2. In this position, the rods 25 and 26 are straightened to lock the input plate in the angulated position to establish a given swash angle for the swash mechanism 4.

The output plate 7 of the swash mechanism is mounted on a spherical coupling 30 whose centre is concentric with the travel path of pivot pins 10. The output plate 7 is capable of undergoing universal movement on the spherical coupling 30.

A plurality of connecting rods 31 are pivotably connected to the output plate 7 by ball joints 32.

The connecting rods 31 are connected by ball joints 33 at their opposite ends to piston rods 34. The piston rods 34 carry pistons 35 which are supported for reciprocal slidable movement in cylinders 36 formed in housing 37 of the damping mechanism 5. The pistons 35 mounted in the cylinders 36 constitute a variable displacement pumping means for a hyudraulic fluid in the housing 37. The damping mechanism comprises a rotatable valve 38 in the housing 37. At each of its ends, the cylinder 36 is connected by ports 39 with a chamber 40 containing the valve 38. As seen in Figure 2 the valve has a constructin including a riased part 41 and a recessed part 42. In the position shown, the recessed part 42 permits free communication between the cylinder 36 and the chamber 40 via the ports 39. As the valve 38 is rotated, the ports 39 become progressively closed to block communication of cylinder 36 and chamber 40. Eventually, the valve 38 can assume a position in which the ports 39 are completely blocked.

The housing 37 is fixed to the output shaft 3 by a frame 43 which supports a mechanism 44 for control of the angular position of the valve 38. The mechanism 44 comprises a slider 45 which is supported on fixed structure for axial travel in the direction shown by the arrows 46 parallel to the axis of rotation X-X. A control disk 47 is moved with the slider 45 and carries helical bushing 48 at its inner periphery which is in mesh with a helical gear 49 rotatably carried on the output shaft 3. The helical gear 49 is secured to a valve gear 50 such that rotation of

10

helical gear 49 by bushing 48 produces corresponding rotation of gear 50. Gear 50 is in mesh with gears 51, secured to respective valves 38, such that rotation of gear 50 produces rotation of gears 51 and valves 38 secured thereto. The axial travel of control disk 47 along output shaft 3 is ensured by the provision of guide tracks 52 in frame 43. In this way, the control disk 47 is prevented from rotating relative to the output shaft 3. The gear 50 is formed with angular slots 53 which allow relative angular movement of the gear 50 with respect to the frame 43 and output shaft 3 in order to control the angle of valves 38.

In operation, in the position illustrated in Figure 1 the clutch is disengaged. In this position, the swash angle is zero and the rotary valves 38 are each in position in its respective housing 37 such that the ports 39 are open. Therefore, hydraulic fluid, such as oil, contained in housing 37 is capable of freely flowing between the cylinder 36 and the chamber 40. In actuality, when the swash angle is zero there is substantially no flow of hydraulic fluid.

To engage the clutch with a minimum of stress, the actuator 21 is displaced to the right in the drawing until the swash angle is locked at a maximum value. In this position, the pin 27 will be to the right in slot 28 and the rods 25 and 26 will be substantially in a straightened aligned relation. At this stage, the pistons 35 will freely displace in their

11

cylinders 36 since the ports 39 are open and the hydraulic fluid is capable of being freely displaced from the cylinder 36 into the chamber 40. To engage the clutch, the slider disk 45 is displaced in either direction 46 to produce rotation of valves 38, whereupon the ports 39 are progressively closed. When the ports 39 are partially closed, heat is dissipated and the clutch is partially engaged. When the ports 39 are completely closed, the pistons 35 are completely locked and the clutch is completely engaged. Thereupon, the output plate 7 undergoes rotation with the input plate 6 and the entire assembly comprising the frame 43 and the output shaft 3 are driven in rotation with the input shaft 2. In the condition of complete engagement of the clutch, there is no slipping or energy dissipation whatsoever.

In order to disengage the clutch, the procedure is reversed: namely, the slider disk 45 is displaced in the direction of 46 to rotate the valves 38 and open the ports 39.

Since the pistons 35 operate in both directions of their stroke when the ports are open, there is no need to have the pistons in opposition to one another. Therefore, an odd number of pistons and cylinders can be employed and 3 or 5 piston cylinder arrangements will be operative. Of course, the greater the number of piston cylinder arrangements, the smoother will be the partial engagement of the clutch.

12

In the construction shown, when the clutch is disengaged there may still be some residual torque transmitted. If this is not acceptable, provision can be made to pull the plates 6 and 7 apart.

The above described construction has the advantage that there is no wear due to the use of high friction surfaces during engagement. In fact, the entire clutch may be enclosed in an oil reservoir with provision to make the slide mechanisms 21 and 45 externally accessible.

Partial engagement of the clutch can be precisely controlled.

No energy dissipation occurs during total disengagement or total engagement.

There is only one "restoring force" that the controls must work against and that is due to the dynamic imbalance of the swash mechanism. In this regard, the swash mechanism tends to straighten to a zero swash angle. However, balancing weights may be employed to control the imbalance, as for example, illustrated in US Patent 4 235 116. Additionally, each swash plate could be made as a hemispherical surface with provision for the necessary clearance. With this constructin, the controls will not be subjected to restoring forces and perfect balance will be obtained for all stages of relative shaft rotation. In contrast, in a friction clutch, constant pressure must be supplied to keep the friction surfaces in engagement.

Instead of the ball-bearing 8 between the plates 6 and 7, a modification is illustrated in Figure 3. This modification is intended to improve the stress distribution to the elements of the clutch. As seen in Figure 3, the input plate 6 is formed with an integral annular race 6a having opposed legs 6b and 6c. The output plate 7 is formed with an annular ring 7a having a leg 7b which is inserted between the opposed legs 6b and 6c of the race 6a. Ball-bearings 8a are interposed between the legs of the ring and the race. With this arrangement, axial stresses tending to push the plates apart are resisted by the plates themselves and not on the shafts.

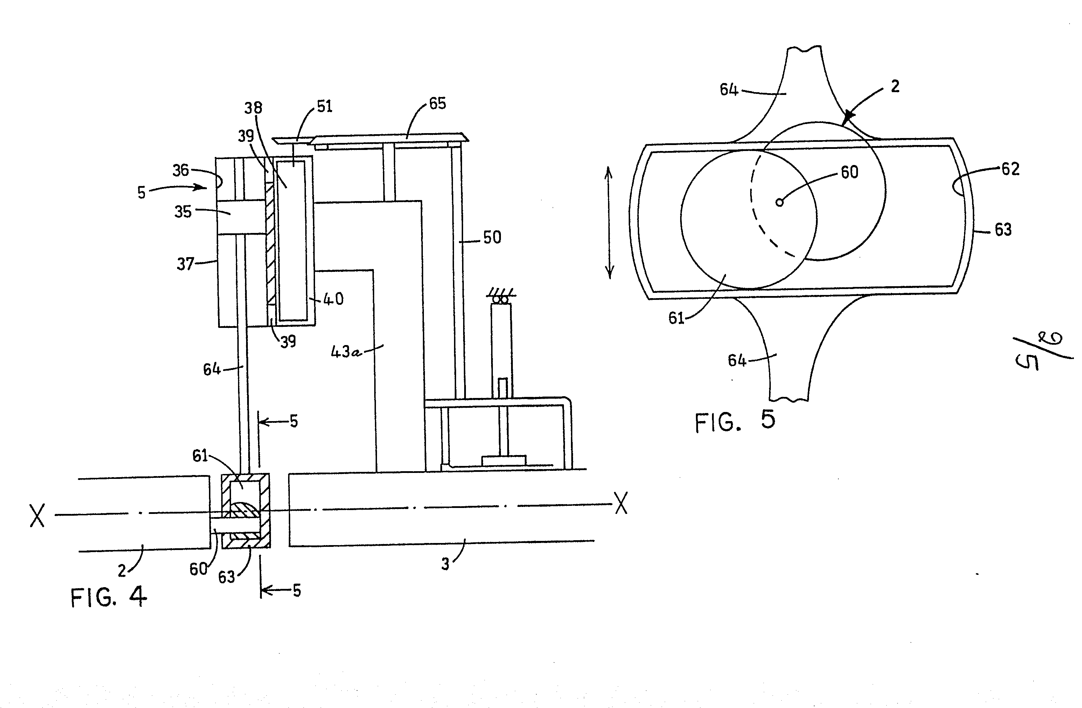

In the embodiment of Figure 1, the swash mechanism 4 was employed to transmit rotational motion from the input shaft 2 into reciprocal movement of the pistons 35 in the cylinders. In the embodiments illustrated in Figures 4-6, there are shown constructions which avoid the use of the swash mechanism and rely upon a radial arrangement utilising an eccentric cam construction.

Referring particularly to Figures 4 and 5, therein it is seen that the input shaft 2 carries an eccentric pin 60 extending axially from the shaft, on which is rotatably supported a roller 61. The roller rides in a slot 62 of a housing 63. Fixed to the housing 63 and extending in a radial plane, are a pair of opposite damper arms 64 each carrying a respective piston 35 which travels in cylinder 36 in respective housing 37 of the same construction as previously described in relation to Figure 1. The rotatable valve 38 is mounted in chamber 40 and performs the function of selectively opening and closing ports 39. The damping mechanism 5 is mounted on the output shaft 3 in the same manner as in Figure 1 with the exception that the frame 43a is now of L-shape in order to take into account the vertical orientation of the damping mechanism in Figure 4 as compared to the horizontal orientation in Figure 1. An additional gear 65 is mounted on the frame 43a in order to transmit drive from gear 50 to gear 51 secured to the rotary valve 38.

The operation of the embodiment in Figures 4 and 5 is identical to that in the embodiment of Figure 1 with the exception that the pistons travel in a plane perpendicular to the axis of rotation X-X of shaft 2. As the shaft 2 rotates, the roller 61 undergoes rolling movement in the slot 62 of the housing 63, while the housing undergoes vertical reciprocation in a plane perpendicular to axis X-X. Thereby, the pistons 35 are driven reciprocally in the cylinders 36 when the valve 38 is in a position in which the ports 39 are open. When the valve is closed, the pistons are locked in the cylinders and the entire damping mechanism undergoes rotation with input shaft 2 to cause rotation of output shaft 3. The position of pin 60 is adjustable in the input and output shafts to vary the eccentricity between zero and a maximum value to control the magnitude of displacement of the piston 35 in the cylinder 36 for each rotation of input shaft 2.

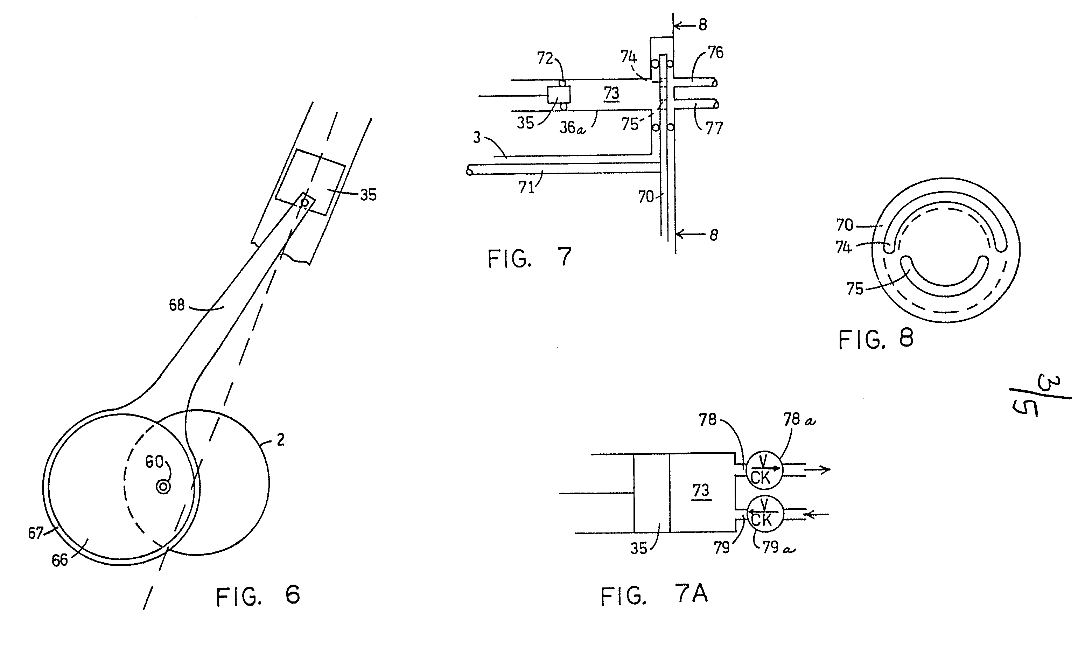

In another modification, as shown in Figure 6, the pistons are arranged for reciprocal movement in the cylinders in a plane perpendicular to the axis X-X. In Figure 6, the arrangement is shown for only one piston but any number can be.used in a radial arrangement. In Figure 6, it is seen that the shaft 2 carries eccentric pin 60 which drives an eccentric cam 66 in revolution around the axis of rotation X-X of shaft 2. The cam 66 supports a bearing ring 67 which is integral with a connecting rod 68 pivotably connected to piston 35. The input shaft 2 could be formed as a crank shaft with offset portions on which the connecting rods are mounted to transmit axial reciprocatory movement to the respective pistons 35. As in Figure 5, the degree of eccentricity between pivot 60 on input shaft 2 and cam 66 is adjustable to vary the displacement of the piston 35 for each rotation of shaft 2.

It has been seen from the above that when the rotary valve 38 is closed to close the ports 39, the pistons 35 become locked in their respective cylinders which produces rotation of output shaft 3 with input shaft 2. The clutch construction can be provided with a torque-limiting characteristic by providing a connection between the ports 39 with a pressure relief valve therein.

Although control of the damping mechanisms 5 has been shown in conjunction with a gear arrangement including slider 45, other possibilities will be evident to those skilled in the art. Among these is the use of a centrifugal control for the rotary valve 38 creating an automatic clutch which will engage with increasing intensity as the output shaft reaches the desired speed to produce locking of the pistons in their cylinders at a critical speed.

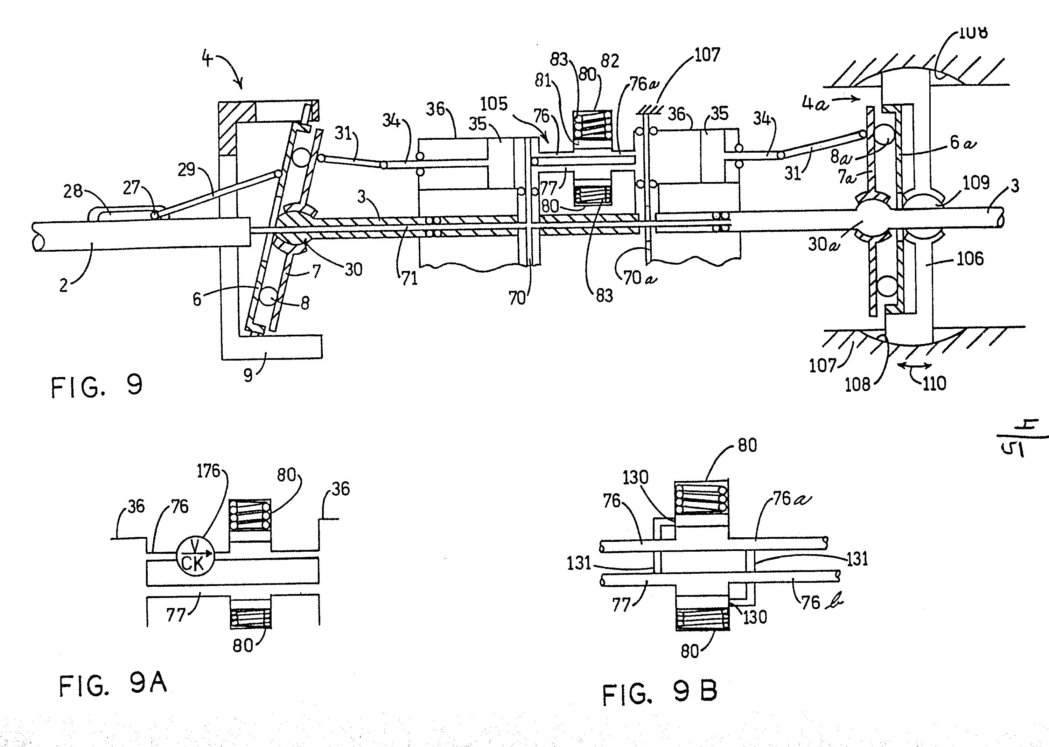

Referring next to Figures 7 and 8, therein is shown a rotary valve 70 in replacement of the damper mechanism 5 and its associated control. The valve 70 is driven in rotation by shaft 71 which extends for rotation within output shaft 3 and extends through universal joint 30 for rigid attachment to input shaft 2 to undergo rotation therewith. The mounting of the rotary valve 70 is illustrated in the embodiment shown in Figure 9. As seen in Figure 7, the piston 35 travels in a cylinder 36a and is sealingly mounted therein by means of seals 72. At the right side of the piston 35, a pressure chamber 73 is formed whereas at the left side the cylinder 36a is open to atmospheric pressure. In other embodiments, both sides of the piston may be utilised. The rotary valve 70 rotates in a vertical plane at the end of chamber 73 at each of the cylinders. The rotary valve 70 is formed with two circumferential slots 74 and 75, each extending over an angle of slightly less than one half of the annular extent of the valve, the slot 74 being located radially outwards at a greater distance from the centre of rotation of the valve 70 as compared to the slot 75. The slots 74 and 75 each extend over less than one half of the annular extent of the valve 70 to provide a solid region between the slots of an extent equal to the diameter of cylinder 73 in order to prevent intercommunication between the slots during rotation of valve 70.

The slot 74 faces an outer channel 76, while the slot 75 faces an inner channel 77. The rotary valve 70 confers the operation of the mechanism as an oil pump rather than as a damped clutch. In this respect, for each rotation of the valve 70, first the outer slot 74 faces chamber 73 and then inner slot 75 faces chamber 73. Since the rotary valve 70 is rotating in synchronism with shaft 2, the piston 35 undergoes one reciprocal stroke for each rotation of the valve 70. During a stroke to the right, one of the slots 74 or 75 communicates with the chamber 73 whereas in the return stroke to the left the other slot communicates with chamber 73. In this way, a continuous path of oil flow is produced in the inner and outer channels 76 and 77. Assuming that outer channel 76 is open to the chamber 73 during the power stroke of piston 35, hydraulic fluid will be pumped into channel 76 during the power stroke and will be returned to chamber 73 via channel 77 in the return stroke. If a one-way check valve 176 is provided in a circuit connecting channels 76 and 77 as in Figure 13 to be described later, an overrun clutch is realised much in the same manner as a ratchet mechanism. As seen in Figure 7A, instead of rotary valve 70, each chamber 73 can be provided with an output port 78 controlled by a check valve and an input port 79 controlled by a check valve 79a. The input and output ports of the chambers are connected to corresponding input and output manifolds via the respective check valves.

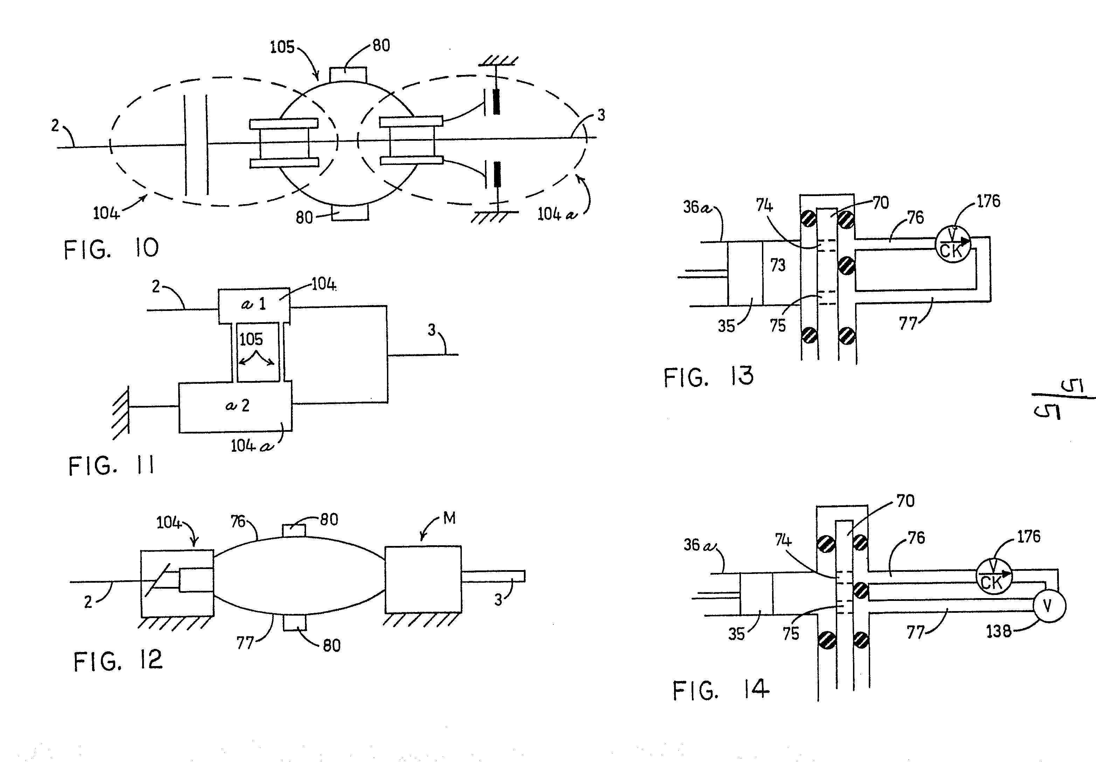

Referring next to Figures 9 and 10, therein is seen an embodiment constituting a clutch of variable gear ratio which is tantamount to a variable hydrostatic transmission or differential hydrostatic transmission.

In Figure 9 there is seen the swash mechanism 4 connected to pistons 35 which are controlled by rotary valve 70 as described in Figures 7 and 8. Instead of the rotary valve 70, the check valves 78a and 79a can be utilised as in Figure 7A. The channels 76 and 77 at the output of the valve 70 are connected to channels 76a and 77a of a rotary valve 70a similar to valve 70 and associated with a second swash mechanism 4a. Effectively, two pump constructions 104, 104a are connected together by a hydraulic circuit 105 composed of channels 76, 76a and channels 77 and 77a. The circuit 105 includes, for each of the pairs of connected channels, a volumetric compensator 80 which includes a piston 81 slidably mounted in a chamber 82 containing a biassing spring 83 acting on the piston 81. The volumetric compensator absorbs pulsations in the pump rates.

The swash mechanism 4a is identical in construction to that of swash mechansim 4 except that input plate 6a is secured to a frame 106 which is supported from fixed structure 107 for pivotal movement in a vertical plane passing through axis of rotation X-X. The pivotal movement of frame 106 takes place in grooves 108 provided in the fixed structure 107. Any suitable means for displacement of the frame 106 can be employed and by way of example may comprise a linkage mechanism of the type shown at 23 in Figure 1. The frame 106 is mounted for pivotal movement on a spherical joint 109 on output shaft 3. The output plate 7a of swash mechanism 4a is mounted for universal movement on spherical joint 30a. Ball-bearings 8a are provided between plates 6a and 7a. By pivotably moving the frame 106, the swash mechanism 4a is moved to an angular position with respect to axis X-X. The frame 106 is movable in opposite directions of pivotal movement as shown by the arrows 110 whereby the swash mechanism 4a may be inclined in one direction or the other for a reason to be explained later. The rotary valve 70a rotatably supports cylinders 36 and is fixed to the fixed structure 107.

Swash pump 104 is effectively mounted on the output side of shaft 2 and its input is supplied by the input shaft 2. Swash pump 104a is connected to swash pump 104 via the hydraulic circuit 105. Figure 10 shows the arrangement where flow of the hydraulic fluid is from the swash pump 104 to the swash pump 104a in the cylinders located above the axis of rotation X-X while return flow takes place from swash pump 104a to swash pump 104 in the cylinders below the axis of rotation X-X. In the next half rotation of the rotary valve 70 connected to input shaft 2, the flow will be reversed and the operation is repeated successively. The swash pumps 104 and 104a are independently adjustable and hydraulic fluid will flow in the circuit 105 when there is relative rotation of the output shaft 3 with respect to the input shaft 2.

By varying the swash angles of one or both swash pumps 104 and 104a, the effective gear ratio between the input shaft 2 and the output shaft 3 may be continuously varied from one to infinity. The flow of hydraulic fluid is zero, both at gear ratios of one and infinity but not in between. Thus, at gear ratios of one and infinity, there are no hydrodynamic losses as will be evident from the following analysis. Assuming:

$V$ = speed of input shaft

$v$ = speed of output shaft

$\sigma$ = V-v (different speed)

$f_1$ = oil flow rate of swash pump 104

$f_2$ = flow rate of swash pump 104a ($f_1=f_2=f$) since the swash pumps are connected.

$a_1$ = a displacement parameter of swash pump 104

$a_2$ = a displacement parameter of swash pump 104a (The displacement parameters can be considered as equivalent to the swash angles of the swash pumps)

$r$ = the effective gear ratio

then:

$$f_1 = (V-v) \times a_1 = \sigma \, a_1 \text{ and}$$

$$f_2 = v \times a_2$$

These equations define the displacement parameters which can be taken as related to the swash angles.

Since $\quad f_1 = f_2,$

$$(V-v) \times a_1 = v \times a_2$$

Then

$$\frac{V}{v} = \frac{a_2}{a_1} + 1 = r \quad \dots \text{ Equation 1}$$

When $a_i = 0$ this means that there is zero displacement for a zero swash angle.

The hydronamic loss H can be taken as proportional to the flow rate and is given by the following expression:

$$f = V \frac{(a_2 \, a_1)}{(a_2 + a_1)} \quad \dots \text{Equation 2}$$

For values of r greater than 1, the hydrodynamic loss is a maximum when the effective gear ratio r is equal to 2. This takes place when $a_1 = a_2$.

If one considers the shcematic diagram of the conventional transmission as shown in Figure 12, therein it is seen that input shaft 2 drives swash pump 104 which feeds hydraulic fluid to and from a conventional hydraulic motor M via channels 76 and 77. The hydraulic motor M directly drives the output shaft 3.

Assuming the velocity of the input shaft to be V and the velocity of the output shaft to be v, then the flow rate f of pump 104 is equal to $Va_1$ and the flow rate of motor M is equal to $VA_2$.

The gear ratio is given by the expression:

$$r = \frac{a_2}{a_1}$$

If $a_2 \neq 0$ and $a_1 \neq 0$

Then $f \neq 0$

A main advantage of the construction of the transmission of the invention over the conventional hydrostatic transmission is that when $a_2 = 0$, the gear ratio is 1:1, which represents a condition of lockup of the pistons in the respective swash pumps 104 and 104a. Under these conditions, the hydrodynamic losses are zero. This makes the transmission of the invention very economical and efficient for conventional automotive use. It is a realtively simple matter to sense the speed of the shafts and the hydraulic pressures to automatically control the swash angles. This makes it particularly suitable as a system for automatic transmissions. It is further to be noted that at lockup, the only moving parts are the shaft and bearings.

Since the transmission of the invention operates with the following parameters:

$$r = \frac{a_2}{a_1} + 1 \text{ and}$$

$$f = V\left(\frac{a_1 \; a_2}{a_1 \; a_2}\right)$$

a number of modes of varying $a_1$ and $a_2$ are possible. Two possibilities present themselves:

Varying $r$ from infinity to 1: $a_2$ is started at a maximum value and $a_1$ at zero ($r$ = infinity). Then $a_1$ is brought to a maximum whereupon, since $a_1$ max. = $a_2$ max., $r$ = 2. Then $a_2$ can be brought to zero whereupon $r$ = 1 and $f$ = 0.

Varying $r$ from any gear ratio $r_i$ to 1:

Starting with $a_1 = a_1$ max., then $r_i = \dfrac{a_2}{a_1 \text{ max}} + 1$

thus, $a_2$ can start at $a_1$ max. $(r_i - 1)$. Then $a_2$ is brought to 0 which brings $r$ to 1 and $f$ to 0.

The transmission of the invention can be utilised to obtain a reverse gearing ratio and an overdrive gear ratio, ie r is less than 1. One example has been shown by making the angle of swash mechanism 104a negative.

More generally, however, since $r = \dfrac{a_2}{a_1} + 1$,

it is possible to provide reverse and overdrive gear ratios (and reverse overdrive as well) by making either $a_2$ or $a_1$ negative. This can be achieved by making the swash angles of swash pumps 104 and 104a negative. Other flow reversing means are also possible, as will become evident to those skilled in the art. In reverse and overdrive gear ratios, the hydrodynamic losses tend to be greater than those for forward drive.

Although pumps 104 and 104a have been shown as swash pumps, other types of constructions can be used such as the variable eccentric cam arrangements illustrated in Figure 4-6. Additionally, pump 104 can be of the check valve type as described with respect to Figure 7A instead of the rotary valve type for selected applications. This would give the transmission a one-directional ratchet like property. This follows from the fact that a check valve pump can act as a pump but not a motor.

While the transmission has been described under the condition that the shaft 2 serves as the input shaft to drive shaft 3 as the output shaft, the arrangement can be reversed in which case shaft 3 would now become the input shaft and would be associated with the non-rotating swash mechanism 4a whereas the shaft 2 would be the output shaft and associated with the rotating swash mechanism 4.

In a generalised sense, the illustration in Fig. 11 shows a simplified schematic arrangement of the transmission of the invention. Therein, it is seen that the output of each pump 104 and 104a is connected jointly to the output shaft 3. This is to be distinguished from the conventional transmission as illustrated in Figure 12 where the pump 104 drives the motor M, which in turn drives the output shaft 3.

In a simplified modification in Figure 13 the channel 76 is directly connected to the channel 77 via a one-way check valve 176. In this way the construction will operate as a simple ratchet or overrun clutch. If the valve 176 is constructed as a variable control valve, then this valve can serve as a variable damping means for the piston and thereby for variable engagement and disengagement of the clutch.

In the modification in Figure 14, a variable control valve 138 is mounted in the circuit connecting channels 76 and 77 downstream of check valve 176. The control valve 138 can be of the same construction as that of rotary valve 38 for providing variable communication between cahnnels 76 and 77 and thereby variable damping of fluid flow outside cylinder 36a.

This construction provides an overrun clutch with capability of variable degrees of engagement thereof.

Figure 9A shows a modification of the construction in Figure 9 by addition of check valve 176 in channel 76. Check valve 176 opens when the pressure in channel 76 exceeds a predetermined value and closes when the pressure falls below this value. This provides an overrun operation in the transmission in Figure 9.

Figure 9B shows another modification of the transmission in Figure 9 by providing pressure relief ports 130 in respective volumetric compensators 80 and channels 131 connecting each relief port of the associated compensator 80 to the other of the channels. Thus, the relief port 130 of the compensator 80 in channel 76 is connected by channel 131 to channel 77 whereas the relief port 130 of the compensator 80 in channel 77 is connected by channel 131 to channel 76. This arrangement serves as a means for limiting torque transfer in the transmission in Figure 9. In similar manner torque transmission can also be limited in the clutch arrangement of Figure 1.

In a broad sense, there is provided a method and apparatus for controllably transmitting torque between the input shaft 2 and the output shaft 3 by producing reciprocal movement of pistons 35 in their respective cylinders in response to rotation of the input shaft 2 and controllably damping external circulation of the fluid from the cylinder 36 to damp the movement of the pistons 35 in their respective cylinders in response to rotation of the input shaft 2 and controllably damping external circulation of the fluid from the cylinder 36 to damp the movement of the pistons and effect rotation of the output shaft 3 in response to the degree of damping of the movement of the pistons in the cylinders. The pistons can travel coaxially with the shaft in the embodiment utilising the swash mechanism 4 or the pistons can travel radially in the embodiments using the eccentric cam mechanisms.

The controlled damping of the movement of the pistons in the cylinders can be effected under the control of the swash pumps as illustrated in Figure 9 to provide a transmission whose gear ratio can go from negative to positive values including overdrive.

Effectively, there is provided a variable displacement hydrostatic pumping means secured to the output shaft for producing fluid flow upon differential rotation of the input and output shafts and power control means for controlling the fluid flow by selectively absorbing or dissipating the power of the fluid flow whereby the output shaft can be driven by the input shaft with a variable degree of rotation.

The power control means may comprise a variable displacement hydrostatic motor whose housing is mounted on fixed structure and whose output shaft is drivingly connected to the output shaft of the apparatus.

The hydrostatic pumping means is of fixed displacement.

By "hydrostatic pumping means" is meant any pumping means which converts substantially all the power of the input shaft rotation (except for frictional losses) into fluid power at all power levels including zero power at which point a constant static fluid pressure may be maintained as a function of the torque of the input shaft. Such hydrostatic pumping means includes piston pumps, diaphragm pumps, peristatic pumps, collapsing chamber pumps, gear pumps and the like. It excludes centrifugal pumps, turbine pumps etc.

By "displacement" of the pump, is meant the volume of fluid pumped for the total shaft rotation angle which is equal to the ratio of the volumetric rate of flow to shaft velocity.

Although the invention has been described in relation to specific embodiments thereof, numerous modificiations and variations will become evident to those skilled in the art without departing from the scope of the invention as defined in the attached claims.

1

CLAIMS

1.  Apparatus for transmitting power from an input shaft having an axis of rotation to an output shaft, said apparatus comprising variable displacement pumping means secured to said output shaft and including a movable member for pumping a fluid, means connected to said input shaft for producing movement of said movable member in response to rotation of said input shaft, and means for controllably damping movement of said member to produce controlled rotation of said output shaft in correspondence therewith whereby the output shaft can be driven from the input shaft with a variable degree of rotation.

2.  Apparatus as claimed in claim 1 wherein said variable displacement pumping means comprises a cylinder and said movable member comprises a piston mounted for reciprocal movement in said cylinder.

3.  Apparatus as claimed in claim 2 wherein said means connected to said input shaft comprises an input plate angularly adjustable on said input shaft, an output plate universally mounted on said output shaft and coupled to said input plate, and connecting said output plate to said piston, said input plate and output plate forming a swash mechanism in which said plates can be inclined relative to the axis of rotation of said input shaft, said apparatus having a disengaged condition in which the piston is freely displaceable, without damping, in said cylinder and an engaged condition in which said input shaft and movement of said piston is damped whereupon said swash mechanism constrains said output plate to rotate and cause said cylinder to rotate around said axis of rotation of the input shaft and drive said output shaft in rotation therewith.

4. Apparatus as claimed in claim 3 wherein in a fully engaged condition of the clutch apparatus, said piston is fully damped and is stationary in said cylinder whereupon said output plate rotates together with said input plate, whereas in a partially engaged condition of the clutch apparatus the piston is partially damped and undergoes reciprocal movement in the cylinder and said output plate rotates relative to the input plate and concurrently undergoes a swash movement.

5. Apparatus as claimed in claim 4 further comprising a second output plate mounted for universal movement relative to said output shaft, a second input plate pivotably mounted on fixed structure for movement in a plane passing through said axis of rotation, said second output and input plates forming a second swash mechanism, means connecting said second input and output plates together in coupled relation for common pivotal movementn realtive to the fixed structure while permitting angular rotation relative to one another, means for adjusting the angular position of said second input plate and thereby that of said second output plate, a second cylinder secured to said output shaft for rotation therewith, a second piston slidably mounted in said second cylinder and connected to said second output plate, and means interconnecting said first and second cylinders for permitting flow of fluid therebetween.

6. Apparatus as claimed in claim 4 or 5 wherein said means which interconnects the first and second cylinders includes a volumetric compensator.

7. Apparatus as claimed in any of claims 1 to 6 comprising means for adjusting the angular position of said input plate on said input shaft.

8. Apparatus as claimed in claim 7 wherein said means for adjusting the angular positon of said input plate on said input shaft includes an actuator which is axially displaceable parallel to the axis of rotation of said input shaft, said means for controllably damping movement of said piston including a second actuator movable axially parallel to the axis of rotation of said output shaft.

9. Apparatus as claimed in claim 2, wherein said means for producing reciprocal movement of said piston comprises cam means eccentrically connected to said input shaft and connected to said piston to produce reciprocal movement of said piston upon rotation of said input shaft.

10. Apparatus as claimed in claim 9 wherein said piston is arranged to undergo reciprocal movement in a plane inclined at an angle relative to the axis of rotation of said input shaft.

11. Apparatus as claimed in claim 9 wherein said plane in which the piston undergoes movement is perpendicular to the axis of rotation of said input shaft.

12. Apparatus as claimed in claim 9, 10 or 11 wherein said cam means is adjustably connected to the input shaft to vary the eccentricity and thereby the stroke of the reciprocal movement of said piston.

13. Power transmitting apparatus as claimed in claim 1 wherein said damping means includes check valve means.

14. Apparatus as claimed in claim 5 wherein the angular adjustment of said second input and output plates relative to the first and second input plates exceeds 90 degrees to enable the output shaft to be selectively driven in opposite directions from the input shaft.

15. Power transmitting apparatus comprising an input shaft having an axis of rotation, an input plate mounted on said input shaft for adjustable angular position relative to said axis of rotation, an output shaft, an output plate mounted for universal movement of said output shaft, means connecting said input and output plates together in coupled relation and permitting angular rotation relative to one another,

5

means for adjusting the angular position of said input plate relative to said input shaft and thereby the angular position of the output plate therewith relative to said output shaft and means secured to said output shaft and connected to said output plate for controllably holding the output plate in said angular position whereby the output plate becomes coupled in rotation with the input plate and said output shaft is driven in rotation.

16. A method of controllably transmitting torque between an input shaft and an output shaft, said method comprising producing movement of a member in a container containing an incompresible fluid in response to rotation of the input shaft, controllably damping external circulation of the fluid in said container to damp movement of said member in said container and rotating the output shaft in response to the degree of damping of the movement of said member in said container.

17. Apparatus for transmitting power from an input shaft having an axis of rotation to an output shaft, said apparatus comprising variable displacement hydrostatic pumping means secured to said output shaft for producing fluid flow upon differential rotation of said input and output shafts, and power control means for controlling said fluid flow by selectively absorbing or dissipating the power of the fluid flow whereby the output shaft can be driven by the input shaft with a variable degree of rotation.

FIG. 1

FIG. 2

FIG. 3

FIG. 4

FIG. 5

5/9

0108577

FIG. 7

FIG. 8

FIG. 6

FIG. 7A

3/5

0108577

FIG. 9

FIG. 9A

FIG. 9B

0108577

FIG. 10

FIG. 11

FIG. 12

FIG. 13

FIG. 14

0108577

European Patent
Office

**EUROPEAN SEARCH REPORT**

| | DOCUMENTS CONSIDERED TO BE RELEVANT | | EP 83306594.9 |
|---|---|---|---|

| Category | Citation of document with indication. where appropriate, of relevant passages | Relevant to claim | CLASSIFICATION OF THE APPLICATION (Int. Cl. ³) |
|---|---|---|---|
| X | US - A - 2 213 616 (SEMON) <br> * Totality * <br> -- | 1,2 | F 16 H 39/08 |
| X | US - A - 996 920 (GIBSON & WHITMAN) <br> * Totality * <br> -- | 1,2 | |
| A,D | US - A - 2 231 100 (WAHLMARK) <br> * Totality * <br> -- | 3,7,8 | |
| A | DE - A - 1 500 480 (RHEINSTAHL- HENSCHEL) <br> * Totality * <br> -- | 5 | |
| A | DE - C - 433 450 (EGERSDÖRFER) <br> * Totality * <br> -- | 6 | TECHNICAL FIELDS SEARCHED (Int. Cl. ³) |
| A | DE - C - 568 720 (WEIGLE) <br> * Totality * <br> -- | 9,11,12 | F 16 H 39/00 |
| A | DE - C - 622 776 (WEIGLE) <br> * Totality * <br> -- | 9,11,12 | |
| A | US - A - 3 620 130 (ROBERTS) <br> * Column 3, line 68 - column 4, line 11 * <br> -- | 14 | |

The present search report has been drawn up for all claims

| Place of search | Date of completion of the search | Examiner |
|---|---|---|
| VIENNA | 30-12-1983 | SCHATEK |

European Patent
Office

**EUROPEAN SEARCH REPORT**

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| A | DE - B - 1 284 242 (MOLLY)<br>* Totality *<br>-- | 15 | |
| A | DE - A - 2 203 478 (KOPAT)<br>* Totality *<br>-- | 15 | |
| A | DE - A - 2 050 944 (CITROEN)<br>* Totality *<br>-- | 17 | |
| A | DE - B - 1 051 602 (DAIMLER-BENZ)<br>* Totality *<br>-- | | TECHNICAL FIELDS SEARCHED (Int. Cl.³) |
| A | FR - A - 1 338 998 (MAZARGUIL)<br>* Totality *<br>-- | | |
| A | US - A - 1 613 525 (MUNRO)<br>* Totality *<br>-- | | |
| A | US - A - 1 775 460 (HERRMANN)<br>* Totality *<br>---- | | |

EPO Form 1503.2   06.78